# EUROPÄISCHE PATENTSCHRIFT

(11) **EP 2 848 596 B1**
(45) Veröffentlichungstag und Bekanntmachung des Hinweises auf die Patenterteilung: **28.07.2021**
(21) Anmeldenummer: 14183603.1
(22) Anmeldetag: 04.09.2014
(51) Int. Cl.: C04B 28/02, C04B 26/18, C04B 40/00, C04B 28/16, C04B 28/14, C04B 28/10, C04B 111/27, C04B 111/28

(54) **BAUSTOFF ENTHALTEND ZEMENT UND DISPERSIONSLEIM, DARAUS HERGESTELLTER BAUSTEIN UND VERWENDUNGEN DES BAUSTOFFS**
BUILDING MATERIAL CONTAINING CEMENT AND DISPERSION GLUE, BUILDING BLOCK MADE THEREFROM AND USES OF THE BUILDING MATERIAL
MATÉRIAU DE CONSTRUCTION CONTENANT DU CIMENT ET DE LA COLLE DE DISPERSION, BLOC DE CONSTRUCTION FABRIQUÉ À PARTIR DE CELUI-CI ET UTILISATIONS DU MATÉRIAU DE CONSTRUCTION

(30) Priorität: 11.09.2013 DE 202013104133 U; 20.06.2014 DE 202014102825 U
(43) Veröffentlichungstag der Anmeldung: 18.03.2015
(60) Teilanmeldung: 15202071.5
(73) Patentinhaber: Sorge, Michael, 37077 Göttingen (DE)
(72) Erfinder: Sorge, Michael, 37581 Bad Gandersheim (DE)
(74) Vertreter: RGTH

(56) Entgegenhaltungen:
- EP-A1- 2 529 924
- EP-A2- 1 308 570
- EP-A2- 2 364 961
- WO-A1-97/19031
- WO-A1-03/040217
- WO-A1-2013/042019
- WO-A2-2008/058588
- DE-A1- 2 054 876
- DE-A1- 2 629 676
- DE-A1- 2 811 024
- DE-A1- 3 319 675
- DE-A1- 3 426 239
- DE-A1- 4 108 985
- DE-A1- 10 105 478
- DE-A1- 19 701 916
- DE-A1- 19 812 247
- DE-A1-102007 062 035
- DE-A1-102011 119 219
- DE-U1- 8 912 522
- NL-C2- 1 031 813
- US-A- 4 579 891
- US-A- 6 121 398
- US-A1- 2011 275 761
- US-A1- 2012 302 672

## Beschreibung

### Technisches Gebiet

Die Erfindung betrifft einen Baustoff mit einem Bindemittel und Dispersionsklebstoff. Ferner betrifft die Erfindung eine Verwendung eines Baustoffs sowie einen Baustein.

### Stand der Technik

Polymerbeton unterscheidet sich von herkömmlichem Beton unter anderem dadurch, dass das Materialgemisch des Polymerbetons Kunststoff oder Kunststoffe enthält. Polymerbeton, im folgenden auch Polymerbetonsystem genannt, erfordert keine Stahlbewährung, da dieser allein aus der Reaktionsklebung Biegezugwerte von 10 Nm/mm² und mehr sowie Druckwerte von 30 Nm/mm² und mehr erreichen oder sogar übersteigen kann. Deshalb sind Polymerbetonsysteme gut geeignet für Reparaturarbeiten, insbesondere für kleinflächige Reparaturarbeiten und Anwendungen aller Art, bei denen eine Stahlbewährung aufwendig und teuer wäre.

Polymerbetonsysteme basieren in der Regel auf mineralölhaltigen Harzen. Die Harz-/Härtesysteme verwenden hochtoxische Stoffe, wie beispielsweise Bisphenol A oder Epichlorhydrin. Die Systeme enthalten Lösemittel und sind aus diesen Gründen in der Regel im nicht reagierten Zustand allergen, cancerogen und allgemein toxisch und deshalb als Gefahrgut einzustufen. Aus diesem Grund ist die Handhabung schwierig, beziehungsweise zumindest eingeschränkt und nur teilweise oder zu hohen Kosten möglich. Des Weiteren sind diese Systeme zwar wasserfest aber in nur sehr eingeschränktem Temperaturbereich temperaturbeständig. Beispielsweise ist das Material in der Regel zwischen -40 °C bis +100 °C temperaturbeständig und resistent gegen aggressive Flüssigkeiten. Derartige Polymerbetonsysteme sind allerdings keineswegs feuerfest oder flammfest und somit für bestimmte Anwendungen nicht geeignet.

Des Weiteren existieren Polymerwerkstoffe, insbesondere auch Polymerbetonsysteme, auf Basis pflanzlicher Epoxide. Derartige Werkstoffe haben allerdings eine geringere Festigkeit und weisen eine langsamere Reaktionsgeschwindigkeit auf. Bei Verwendung von kostengünstigen und in ausreichender Masse verfügbarer Epoxidharze, sind derartige Systeme somit ebenfalls für bestimmte und spezielle Anwendungen nicht geeignet.

Des Weiteren ist die Anwendung derartiger Werkstoffe basierend auf pflanzlichen Epoxiden oft kompliziert, da exakte und eng begrenzte Mischverhältnisse eingehalten werden müssen. Ferner werden oft aufwendige Vormischungen gefordert, die in der Regel erst vor Ort bei der Anwendung hergestellt werden können. Des Weiteren muss im Allgemeinen auf Restfeuchte im Material oder der Umgebung bei Anwendung geachtet werden, weil diese die Reaktion negativ beeinträchtigen können. Bei erhöhten Außentemperaturen weisen derartige Systeme nur sehr kurze Topfzeiten auf, die die fachgerechte Anwendung erschweren oder gar unmöglich machen.

In der DE 10 2006 060 917 A1 wird ein Härtersystem zur Herstellung von gefüllten Polymerbetonen auf Basis nativer Epoxide beschrieben. Das darin beschriebene Härtersystem arbeitet mit einer flüssigen Vormischung.

In der DE 196 27 165 A1 wird ein Polymerwerkstoff sowie ein Verfahren zur Herstellung und dessen Verwendung beschrieben. Hierfür werden verschiedene pflanzliche hochepoxidierte Epoxide mit hohem Sauerstoffgehalt verwendet. Dabei werden Polycarbonsäuren und hochepoxidierte Triglyceride mit verschiedenen Füllstoffen zur Herstellung von Faserplatten und Formteilen und Ähnlichem beschrieben.

Zur Isolierung von Räumen und Gebäuden sind die verschiedensten Dämmtechniken, beispielsweise Verwendung von Glaswolle, Holzfasern, Styropor, Gasbeton, Schüttgut und Naturfasern bekannt.

Des Weiteren sind vakuumbasierte Isoliersysteme, wie sie beispielsweise in der DE 103 59 005 A1 beschrieben sind, bekannt. Darin wird eine Vakuum-Isolations-Platte, bestehend aus einer Faserplatte als Kern und einem darüber gezogenen Aluminiumsack, der verschweißt und vakuumgezogen wird, offenbart. Derartige Vakuum-Isolations-Platten können als Dämmplatten zur Isolierung von beispielsweise Räumen jeglicher Art eingesetzt werden.

Die US 4,579,891 A beschreibt eine Feldspat enthaltende Zusammensetzung. Die Zusammensetzung besteht aus einer Trockenmischung, einem Feldspatfüllstoff sowie einem flüssigen Polymerklebstoff in Form einer wässrigen Ethylen-Vinyl-Acetat-Emulsion.

In der DE 101 05 478 A1 wird eine Fahrbahn beschrieben, bei der ein körperliches Element mittels eines zementgebundenen Dispersionsklebers mit der Fahrbahn verbunden ist.

Die DE 20 54 876 A1 beschreibt ein Verfahren zur bauseitigen Herstellung einer Verkleidung für Rohbauwände oder -decken, die zumindest teilweise aus schall- und wärmedämmenden Platten aus aufgeschäumtem Polystyrol besteht. Dabei ist vorgesehen, dass die Platte aus aufgeschäumtem Polystyrol mit Hilfe eines fugenfüllenden Mittels, das einen Dispersionskleber als eine Komponente enthält, unmittelbar an die zu verkleidende Fläche angehaftet wird.

In der WO 97/19031 A1 wird ein Dämmstoff zur Schall- und/oder Wärmedämmung beschrieben. Dabei ist vorgesehen, dass der Dämmstoff auf einem EPS-Leichtbeton basiert, welchem Klebemittel beigefügt werden können.

### Darstellung der Erfindung: Aufgabe, Lösung, Vorteile

Die Aufgabe der Erfindung liegt darin, einen Baustoff sowie eine verbesserte Ausgestaltung eines Bausteins bereitzustellen, wodurch kostengünstig eine erhöhte Dämm- und Isolierwirkung erreicht wird und der Baustein aus dem Baustoff hergestellt werden kann.

Der Gegenstand der Erfindung ist in den Ansprüchen 1 bis 10 definiert.

Erfindungsgemäß ist ein Baustoff, nämlich Beton, vorgesehen, wobei der Baustoff ein Bindemittel sowie Dispersionsklebstoff, nämlich Dispersionsleim, aufweist. Das Bindemittel könnte aus jedem geeigneten Rohstoff oder jeder geeigneten Mischung aus Rohstoffen bestehen, welche durch Hinzugabe von Wasser aushärten. Erfindungsgemäß weist das Bindemittel Zement auf. Somit kann als Bindemittel zum Beispiel Zementmörtel, Schnellzement oder Schnellzementmörtel vorgesehen sein.

Der Dispersionsleim basiert bevorzugterweise auf nativen Komponenten. Grundsätzlich könnte der Dispersionsklebstoff einer Beanspruchungsgruppe D1 bis D4 angehören. Erfindungsgemäß ist vorgesehen, dass der Dispersionsklebstoff der Gruppe D3 oder D4 angehört. Die Beanspruchungsgruppen D1 bis D4 beziehen sich auf DIN/EN204. Bei den, den Gruppen D3 oder D4 zugehörigen, Dispersionsklebstoffen handelt es sich um im Wesentlichen wasserfeste Materialien. Diese sind somit auch für Verwendungen vorgesehen, bei welchen Wassereinwirkung nicht ausgeschlossen werden kann.

Der Baustoff weist den Dispersionsklebstoff mit einem Massenanteil zwischen 10% und 50% auf. Bevorzugterweise weist der Baustoff den Dispersionsklebstoff mit einem Massenanteil zwischen 20% und 40%, auf.

Der Baustoff weist das Bindemittel mit einem Massenanteil zwischen 25% und 90%, sowie bevorzugterweise zwischen 35% und 60% auf.

Bei herkömmlichem Zement-Sand-Wasser-Beton werden Bindemittel, beispielsweise Zement, und Zuschlagsstoffe, beispielsweise Sand, durch Zugabe von Wasser in entsprechender Mindestmenge ausgehärtet. Dispersionsklebstoff, beispielsweise Dispersionsleim, weist Wasser auf. Es hat sich überraschenderweise gezeigt, dass Dispersionsklebstoff bei Reduzierung des Wasseranteils in einer entsprechenden Mindestmenge aushärtet. Durch die Hinzugabe von Dispersionsklebstoff zu dem Bindemittel, nämlich Zement, kann auf eine zusätzliche Zugabe von Wasser verzichtet oder die benötigte Menge von zusätzlichem Wasser zumindest reduziert werden. Diese hydrodynamische Dispersion, quasi in symbiotischer Funktion beider Bestandteile, wobei ein Bestandteil abgibt, was der andere Bestandteil zum Aushärten benötigt, lässt in einer Doppelreaktion eine hochfeste Betonvariante entstehen, die ohne Stahlbewährung auskommen kann und wasser-, feuer- sowie säurefest ist.

Bevorzugterweise ist vorgesehen, dass der Baustoff mindestens einen Zuschlagsstoff aufweist, wobei der Zuschlagsstoff Kies, Sand, Mehl, Farbpigmente, Aluminiumhydroxid und/oder einen pflanzlichen Rohstoff, insbesondere Stärke und/oder Faserstoff sein kann. Der Zuschlagsstoff dient dabei als Füllstoff. Bevorzugterweise weist der Füllstoff eine Funktionswirkung auf. Durch das Hinzufügen von Farbpigmenten kann dem Endprodukt beispielsweise ein Farbton gegeben werden. Durch das Hinzufügen von Aluminiumhydroxid kann die Feuerfestigkeit des Endproduktes verbessert werden, da Aluminiumhydroxid als Flammenhemmer wirkt.

Der Zuschlagsstoff könnte beispielsweise Quarzsand und/oder Quarzmehl aufweisen oder aus diesem bestehen. Besonders bevorzugterweise weist der mögliche Zuschlagstoff Sand mit einer im Wesentlichen runden Kornstruktur, beispielsweise "Wüstensand", auf. Des Weiteren könnte ein für den Zuschlagsstoff vorgesehener pflanzlicher Rohstoff Hanffasern und/oder Leinfasern aufweisen.

Ferner kann der Baustoff mindestens eine Zusatzkomponente zur Verstärkung aufweisen. Dabei ist vorgesehen, dass die Zusatzkomponente zum Beispiel Glasfasern aufweist oder aus diesen besteht. Die Zusatzkomponente wirkt somit als verstärkender Hilfsstoff zur Erhöhung der Widerstandsfähigkeit, zum Beispiel des Biegezuges und des Druckes. Die Zusatzkomponente könnte Glasfaserschnitzel oder ein Glasfasergelege, beispielsweise ein leichtes grobmaschiges Glasfasergelege, aufweisen oder aus diesem bestehen.

Der Baustoff härtet in einer Weise aus, die der eines Polymerbetons ähnlich ist. Die vernetzten Bestandteile, zum Beispiel Zuschlagsstoffe und Zusatzkomponenten, werden durch den Dispersionsklebstoff gebunden. Dies wird im Folgenden als äußere Vernetzung bezeichnet. Gleichzeitig aber vernetzt der Bindemittelanteil durch das dem Dispersionsklebstoff entzogene Wasser selbstständig aus. Diese Vernetzung wird im Folgenden als innere Vernetzung bezeichnet. Die Kombination aus beiden parallel ablaufenden Vernetzungsreaktionen ergibt eine hochfeste Materialbindung, die sämtliche Eigenschaften des jeweils einzelnen Bindungstyps (Zement-Sand-Wasser / Polymerharz-Härter) in einem Material vereinigt. Somit entsteht ein Baustoff, nämlich Beton, welcher feuerfest, wasserfest, hochfest, restflexibel, nicht-toxisch ist sowie kein Gefahrgut darstellt und ohne Stahlbewährung auskommt. Da hierdurch die Eigenschaften unterschiedlicher bekannter Betonklassen vereint werden, wird der resultierende Baustoff im Folgenden als Dispersionsbeton bezeichnet. Durch den vorbeschriebenen Baustoff wird somit eine völlig neue Betonklasse definiert.

Der Massenanteil von Bindemittel, Zuschlagsstoff und Zusatzkomponente beträgt zusammen bevorzugterweise zwischen 50% und 90%, sowie besonders bevorzugterweise zwischen 60% und 90%. Dabei beträgt der Massenanteil von Zuschlagsstoff und Zusatzkomponente zusammen bevorzugterweise zwischen 5% und 25%.

Grundsätzlich können die Komponenten Bindemittel, Dispersionsklebstoff, Zuschlagsstoff und Zusatzkomponente nahezu beliebig vermischt werden, solange der Massenanteil des Dispersionsklebstoffes nicht höher als 50% ist, da der resultierende Baustoff sonst zu nass wird. Des Weiteren sollte der Massenanteil des Dispersionsklebstoffes nicht kleiner als 10% sein, da der resultierende Baustoff sonst zu trocken ist und nicht homogen aushärtet. Das Material ist prinzipiell kalthärtend.

Zur Erhöhung der Endfestigkeit und Beschleunigung der Härtung kann eine Temperierung des zu härtenden Materials eingesetzt werden. Diese kann vorzugsweise in einem Ofen, aber auch mittels eines Heißluftgebläses auf eine Temperatur von bevorzugterweise über 50°C, sowie besonders bevorzugterweise über 100°C für jeweils mindestens 2 Minuten aber nicht länger als 10 Minuten erwärmt werden. Nach erfolgter Erkaltung erzielt das Material eine erhöhte Bindung in seinen Komponenten bei erhöhter Materialdichte. Dies kann die Festigkeit und Widerstandsfähigkeit des Endprodukts erhöhen.

Der vorbeschriebene Baustoff mit seinen erfindungswesentlichen sowie bevorzugten Bestandteilen ist nach Vernetzung praktisch nicht mehr in der Lage, Wasser von außen aufzunehmen. Die Wasseraufnahme liegt deshalb nach Vernetzung unter 0,1%. Somit liegt Feuchtigkeit nur auf der Oberfläche auf und verdunstet in kürzester Zeit wieder. Die Restflexibilität des Baustoffes ermöglicht es, die unterschiedlichen Temperaturkoeffizienten der einzelnen Komponenten mit oder ohne Stahlbewährung derart flexible mitzugehen beziehungsweise auszugleichen, dass eine Rissbildung deutlich verringert wird. Damit ist die Entstehung von Langfristschäden am fertigen Objekt, welches auf dem vorbeschriebenen Baustoff basiert, deutlich hinausgezögert oder gar unterbunden.

Erfindungsgemäß ist die Verwendung des vorbeschriebenen Baustoffes zur Herstellung von Baukomponenten, beispielsweise Bausteinen, vorgesehen. Der vorbeschriebene Baustoff kann aber auch anderweitig verwendet werden. Erfindungsgemäß ist der vorbeschriebene Baustoff für die nachträgliche Sanierung von Objekten verwendbar. Die hier aufgezeigten vorteiligen Eigenschaften eröffnen eine zusätzliche Möglichkeit, die zukünftig im modernen Betonbau sehr interessant sein kann. Die hochfeste "Doppelvernetzung" und Doppeleigenschaften von Polymerbeton und Zementbeton bei gleichzeitiger Handhabung, wie bei herkömmlichem Zementbeton, erlauben den Einsatz sogar von "Wüstensand", der aufgrund seiner runden Kornstruktur sonst kaum oder gar nicht geeignet ist für den Betonbau. Die Verzahnung der Kornstruktur ist dort nicht ausreichend und demzufolge die Druck- und Biegezuglasten zu klein. Die Doppelvernetzung des Baustoffes mit Dispersionsklebstoff würde die Füllkomponente (Wüstensand), jedoch ohne wesentliche Qualitätsverluste zulassen. Dies eröffnet der weltweiten Betonindustrie, insbesondere der in den ökonomisch wachsenden Wüstenländern, völlig neue Rohstoffzugänge, was zu massiver Entlastung des Marktes führen kann und die weltweit üblichen Sand-Transporte reduzieren könnte.

Der vorbeschriebene Baustoff ist aufgrund seiner Eigenschaften ein schnelles, hochfestes, feuerfestes, wasserfestes, säurebeständiges und restflexibles Betonsystem, das kein Gefahrgut darstellt und nicht-toxisch wirkt - weder in der Verarbeitung (nass) noch nach Aushärtung (trocken). Damit ist eine Anwendung in nahezu allen industriellen Bereichen, bis hin zum Modellbau oder der Einzelanwendung sogar im privaten Bereich, denkbar und möglich. Insbesondere die biologische, nicht-toxische Basis macht den vorbeschriebenen Baustoff, im Gegensatz zu herkömmlichem BPA-Polymerbeton, für den Privatanwender interessant. Aber auch im industriellen Gewerbebau ist die nicht-toxische Basis ein deutlicher Vorteil in der Verarbeitung und im Transport des Materials, da keine Gefahrgutaufschläge, wie bei BPA-Polymerbeton, notwendig sind. Erfindungsgemäße Verwendungen für den vorbeschriebenen Baustoff sind Hausbau, Gewerbebau, Fertigbau, Betonsanierung, Brückensanierung, Kaminsanierung, Maschinenfundamente, Fertigteile, Formteile, Rohrbau, Hoch- und Tiefbau sowie vieles mehr.

Erfindungsgemäß ist ferner ein Baustein vorgesehen, welcher einen vollumfänglich umschlossenen Hohlraum aufweist. Durch den vollumfänglich umschlossenen Hohlraum wird ein Volumen im Inneren des Bausteines definiert. Der erfindungsgemäße Baustein weist im Hohlraum einen Unterdruck in Bezug auf eine Umgebung bei Normalbedingung auf. Somit weist das durch den vollumfänglich umschlossenen Hohlraum definierte Volumen einen Unterdruck auf. Unter Normalbedingung ist im Sinne dieser Erfindung ein Druck in Höhe von 1.013,25 mbar zu verstehen.

Bevorzugterweise ist mindestens ein Hohlraum im Baustein vollumfänglich umschlossen ausgebildet. Es können in einem Baustein auch mehrere voneinander getrennte Hohlräume vollumfänglich umschlossen ausgebildet sein. Besonders bevorzugterweise ist vorgesehen, dass der Baustein im Inneren einen einzigen Hohlraum aufweist, welcher durch sechs Seitenwände beziehungsweise Außenwände des Bausteins vollumfänglich umschlossen ist. Dabei ist bevorzugterweise vorgesehen, dass der Baustein würfelförmig oder quaderförmig ausgebildet ist. Ferner ist der Baustein im Wesentlichen luftdicht umschlossen. Hierunter ist zu verstehen, dass der Unterdruck im Hohlraum des Bausteins für einen größeren Zeitraum, beispielsweise mindestens ein Jahr, ohne größere Veränderung (+/- 50 mbar) aufrechterhalten wird.

Dadurch, dass im Baustein ein Hohlraum mit einem Unterdruck in Bezug auf eine Umgebung bei Normalbedingung vorgesehen ist, kann eine hohe Dämmwirkung erreicht werden. Es ist bekannt, dass die beste Isolierung gegen thermische Übergänge durch Vakuum gebildet werden kann. Durch das Vorsehen eines Unterdruckes im Inneren des Bausteins wird somit eine sehr gute thermische Isolierung erreicht.

Bevorzugterweise ist vorgesehen, dass der Baustein im Hohlraum einen Druck kleiner 800 mbar, besonders bevorzugterweise kleiner als 500 mbar, sowie ganz besonders bevorzugterweise kleiner 300 mbar aufweist. Somit ist ganz besonders bevorzugterweise vorgesehen, dass der Baustein im Hohlraum ein Grobvakuum (zwischen 1 mBar und 300 mBar) aufweist.

Der Baustein weist bevorzugterweise mehrere Teile, besonders bevorzugterweise zwei halbschalenförmige Teile, auf, durch welche der Hohlraum umschlossen wird. Dabei sind die mehreren Teile, beispielsweise die halbschalenförmigen Teile, mittels eines Klebemittels miteinander verklebt. Beispielsweise kann der Baustein aus zwei im Wesentlichen identischen halbschalenförmigen Teilen bestehen, welche an ihren stirnseitigen Kanten, beziehungsweise Stoßflächen, miteinander verklebt sind. Hierbei ist bevorzugterweise vorgesehen, dass das Klebemittel dasselbe Material wie der Baustein beziehungsweise die Teile des Bausteines aufweist. Beispielsweise können sowohl die einzelnen Teile, beispielsweise halbschalenförmigen Teile, sowie auch das Klebemittel aus Beton bestehen.

Ferner ist bevorzugterweise vorgesehen, dass die Stoßflächen der einzelnen Teile des Bausteines Vertiefungen und/oder Erhebungen aufweisen. Beispielsweise könnte die Stoßfläche eines ersten Teils, beispielsweise einer ersten Halbschale, Erhebungen und/oder Vertiefungen aufweisen, wobei das zweite Teil, beispielsweise die zweite Halbschale, korrespondierende Vertiefungen und/oder Erhebungen aufweist. Zum Beispiel könnte die Verbindungsstelle zwischen den beiden Teilen Nut-Feder-Profil-förmig ausgebildet sein. Durch Vorsehen von Erhebungen und Vertiefungen im Bereich der Stoßflächen kann die Kontaktfläche zwischen den Teilen des Bausteines erhöht werden und somit die Stabilität verbessert werden.

Der Baustein weist bevorzugterweise eine Außenfläche auf, welche vollumfänglich aus einem einzigen Baustoff, insbesondere Beton, ausgebildet ist. Dabei ist zumindest die Außenschicht des Bausteines aus einem einzigen Material ausgebildet. Bevorzugterweise besteht die Außenschicht aus demselben Baustoff, wie der Baustein beziehungsweise die einzelnen Teile des Bausteines.

Auch ist bevorzugterweise vorgesehen, dass der Baustein in einer Seitenwand ein Verschlussmittel aufweist, wobei das Verschlussmittel elastisches Material aufweist. Dabei ist das Verschlussmittel zumindest bereichsweise in der Seitenwand, beispielsweise in einer Durchbrechung oder Bohrung durch die Seitenwand, angeordnet. Das elastische Material kann beispielsweise Schaumstoff aufweisen oder aus Schaumstoff bestehen. Ferner ist das elastische Material bevorzugterweise über mehr als die Hälfte, sowie besonders bevorzugterweise über mehr als Dreiviertel der Wanddicke der Seitenwand im Bereich des Verschlussmittels in dieser Seitenwand angeordnet. Das Verschlussmittel besteht somit bevorzugterweise teilweise aus einem elastischen Material, welches über mehr als die Hälfte der Seitenwanddicke, nicht aber über die gesamte Seitenwanddicke in einer Durchbrechung oder Bohrung durch die Seitenwand angeordnet ist. Ferner ist bevorzugterweise vorgesehen, dass das Verschlussmittel zwischen zwei Teilen, beispielsweise zwei halbschalenförmigen Teilen, des Bausteines angeordnet ist.

Dadurch, dass bevorzugterweise ein Verschlussmittel in einer Seitenwand des Bausteines vorgesehen ist, wobei das Verschlussmittel zumindest bereichsweise aus elastischem Material besteht, kann der Unterdruck im Hohlraum des Bausteines bevorzugterweise nach Zusammenfügen beziehungsweise Zusammenkleben der einzelnen Teile, beispielsweise halbschalenförmigen Teile, des Bausteines erzeugt werden. Beispielsweise kann nach Zusammenfügen der einzelnen Teile des Bausteines eine Bohrung durch eine Seitenwand des Bausteines angebracht werden und diese Bohrung zumindest über die Hälfte der Seitenwanddicke mit elastischem und im Wesentlichen luftdichtem Material ausgefüllt werden. Das elastische Material ist mittels eines hohlen stiftförmigen Mittels, beispielsweise eines Metalldochtes, durchstechbar. Daran kann ein Saugtrichter und/oder ein Sauger oder eine Vakuumpumpe, bevorzugterweise mit Manometer, angeschlossen werden und dem Hohlraum Luft entzogen werden und somit ein Unterdruck im Hohlraum des Bausteines erzeugt werden. Nach Entfernen des hohlen stiftförmigen Mittels, beispielsweise des Metalldochtes, aus dem elastischen Material, wird die Öffnung von dem elastischen Material unverzüglich geschlossen gehalten und somit der erzeugte Unterdruck im Hohlraum im Wesentlichen beibehalten.

Das Verschlussmittel ist ferner bevorzugterweise irreversibel in der Seitenwand des Bausteines angeordnet. Dabei ist bevorzugterweise vorgesehen, dass das Verschlussmittel neben dem elastischen Material noch ein Abschlusselement aufweist. Das Abschlusselement kann beispielsweise Klebstoff und/oder Beton aufweisen beziehungsweise aus diesem bestehen. Dadurch kann nach Erzeugung des Unterdruckes im Hohlraum des Bausteines von außen die verbleibende Öffnung zwischen dem elastischen Material in der Durchbrechung oder Bohrung durch die Seitenwand und der Außenfläche der Seitenwand des Bausteines ausgefüllt werden. Das Verschlussmittel ist somit irreversible in der Seitenwand des Bausteines angeordnet, da das Abschlusselement, beispielsweise der Klebstoff und/oder Beton, nur durch Zerstörung entfernt werden kann.

Außerdem weist zumindest eine Seitenwand des Bausteines zwei Bereiche unterschiedlicher Dicke auf. Dabei kann ein erster Bereich mit geringerer Dicke umlaufend und beabstandet zur Außenkante angeordnet sein. Ein zweiter Bereich mit größerer Dicke kann beispielsweise zur Mitte der Seitenwand hin angeordnet sein.

Auch ist bevorzugterweise vorgesehen, dass zumindest eine Seitenwand des Bausteines eine zur Mitte hin abnehmende Dicke aufweist. Beispielsweise kann im Bereich des Überganges zweier Teile, beispielsweise halbschalenförmiger Teile, des Bausteines eine geringste Dicke dieser Seitenwand vorgesehen sein. Besonders bevorzugterweise sind eine erste Seitenwand und eine zweite Seitenwand mit je zwei Bereichen unterschiedlicher Dicke vorgesehen. Des Weiteren sind besonders bevorzugterweise eine dritte und eine vierte Seitenwand mit zur Mitte hin, ganz besonders bevorzugterweise linear, abnehmender Dicke vorgesehen. Dabei kann die geringste Dicke im Übergangsbereich einzelner Teile des Bausteines und/oder im Bereich des Verschlussmittels vorgesehen sein. Diese Formgebung erleichtert die Befüllung des Formteils und die Ausformung des Formteils. Außerdem erhöht es die statische Festigkeit des fertigen Hohlsteins.

Beispielsweise könnte der Baustein mit einem vollumfänglich umschlossenen Hohlraum, durch welchen ein Volumen im Inneren des Bausteines definiert wird, durch zumindest die folgenden Schritte hergestellt werden:
a) Herstellen von mindestens zwei Teilen, insbesondere Halbschalen, des Bausteins durch Gießen und anschließendes Aushärten;
b) Verkleben der mindestens zwei Teile miteinander, derart, dass durch diese der vollumfänglich umschlossene Hohlraum gebildet wird;
c) Herstellen einer Durchbrechung durch eine Seitenwand des Bausteins;
d) Einführen eines elastischen Materials eines Verschlussmittels in die Durchbrechung;
e) Durchstechen des elastischen Materials mit einem hohlen stiftförmigen Mittel;
f) Entziehen von Luft aus dem Hohlraum durch das hohle stiftförmige Mittel zur Erzeugung eines Unterdrucks in Bezug auf eine Umgebung bei Normalbedingung;
g) Entfernen des hohlen stiftförmigen Mittels, derart, dass beim Entfernen die Durchbrechung im Wesentlichen luftdicht durch das in der Durchbrechung angeordnete elastische Material verschlossen wird;
h) Verschließen der Durchbrechung mit einer weiteren Komponente des Verschlussmittels, derart, dass die Durchbrechung irreversibel verschlossen wird.

Die vorgenannten Schritte a) bis h) sind nicht notwendigerweise in dieser Reihenfolge durchzuführen. Beispielsweise kann das elastische Material in Schritt e) mit dem hohlen stiftförmigen Mittel bereits vor Einführen des elastischen Materials in die Durchbrechung in Schritt d) durchstochen werden. Des Weiteren könnte beispielsweise die Durchbrechung durch die Seitenwand in Schritt c) bereits während dem Herstellen der mindestens zwei Teile in Schritt a) in den Seitenwandteilen der einzelnen Teile, beispielsweise Halbschalen, hergestellt werden.

Bevorzugterweise kann vor oder nach Herstellen des Unterdrucks in Schritt f) ein Erwärmen oder Erhitzen der zusammengefügten Teile auf eine vorbestimmte Mindesttemperatur sowie ein anschließendes Abkühlen vorgesehen werden. Hierdurch kann die Festigkeit des Bausteins erhöht werden. Zur Erhöhung der Endfestigkeit und Beschleunigung der Härtung kann eine Temperierung des zu härtenden Materials eingesetzt werden. Diese kann vorzugsweise in einem Ofen, aber auch mittels eines Heißluftgebläses auf eine Temperatur von bevorzugterweise über 50°C, sowie besonders bevorzugterweise über 100°C für jeweils mindestens 2 Minuten aber nicht länger als 10 Minuten erwärmt werden. Nach erfolgter Erkaltung erzielt das Material eine erhöhte Bindung in seinen Komponenten bei erhöhter Materialdichte. Dies kann die Festigkeit und Widerstandsfähigkeit des Endprodukts erhöhen.

Vorteilhafterweise ist eine Verwendung des Bausteines für den Hausbau, Hallenbau, Industriebau, Kühlkammerbau, Containerbau, Fundamentbau, Estrichbodenbau, Maschinenfundamentbau, Sonderbau und vieles mehr vorgesehen. Durch die Verwendung des vorbeschriebenen Bausteins kann als Teil der energetischen Ausstattung im Hochbau im Rahmen der Umstellung auf neue Energietechniken ein beträchtlicher Teil beigetragen werden. Beispielsweise wäre es möglich, einen großen Teil der benötigten Heizenergie im privaten, wie im gewerblichen Hausbau einzusparen und somit gar nicht erst entstehen zu lassen. Berechnungen haben ergeben, dass beispielsweise ein 100-m²-Wohnhaus, vollständig mit dem vorbeschriebenen Baustein erstellt, über 90% der Energie eines herkömmlichen Hauses und über 50% der Energie eines Niedrigenergiehauses einsparen kann.

Ein weiterer Vorteil des vorbeschriebenen Bausteins ist, dass die Wandstärke im Vergleich zu herkömmlichen Niedrigenergiehäusern wesentlich geringer, beispielsweise lediglich halb so stark, gehalten werden muss. Somit kann die nutzbare Wohnfläche bei identischer Grundfläche um mehr als 10% vergrößert werden. Des Weiteren sind die Herstellungskosten eines Hauses, welches auf dem vorbeschriebenen Baustein basiert, im Vergleich zu einem herkömmlichen Niedrighaus um über 30% günstiger, da für den Rohbau außer dem Steinsystem im Prinzip keine weiteren Gewerke notwendig sind. Des Weiteren sind keine Fassadenverkleidung, keine Innenauskleidung und keine Innendämmung erforderlich. Lediglich ein Außen- und Innenanstrich wäre nötig, da es in einem System, basierend auf dem vorbeschriebenen Baustein, kein Tauwasser innerhalb der Außenwände entsteht. Ein System, basierend auf dem vorbeschriebenen Baustein, ist deutlich günstiger, was die notwendigen Rohstoffe betrifft, als alle vergleichbar leistungsfähigen Wand- und Isoliersysteme. Die Bauzeit pro Quadratmeter Wandsystem ist deutlich geringer als bei vergleichbar leistungsfähigen Wand- und Isoliersystemen. Somit ist der vorbeschriebene Baustein, basierend auf einem vorbeschriebenen Baustoff, insbesondere Dispersionswerkstoff, eine ideale Systemgrundlage für energetisch hocheffizientes, umweltfreundliches und wirtschaftliches Bauen und somit eine ideale Komponente für den Systembau.

### Figurenbeschreibung

Die Erfindung wird nun mit Bezug auf die begleitenden Zeichnungen für die Ausführungen 300 und 400 erläutert.

Es zeigen schematisch:
- Figur 1: die Herstellungsschritte für die Herstellung der Baustoffmischung sowie für die Herstellung eines Polymerwerkstoffs,
- Figur 2a: einen Polymerbetonbaustein,
- Figur 2b: einen Ausschnitt eines Kamins,
- Figuren 2c - 2e: eine Straßensanierung,
- Figuren 2f - 2h: Gebäudesanierung sowie Holz-Betonverbundteile,
- Figur 3: eine perspektivische Ansicht eines Bausteines,
- Figur 4a: einen Querschnitt einer Gießform zur Herstellung eines halbschalenförmigen Teils eines Bausteines,
- Figur 4b: einen Querschnitt durch einen aus zwei halbschalenförmigen Teilen zusammengesetzten Baustein,
- Figur 4c: eine Draufsicht auf einen halbschalenförmigen Teil eines Bausteines,
- Figur 5: einen Ausschnitt eines aus zwei halbschalenförmigen Teilen zusammengesetzten Bausteines in Querschnittsdarstellung, und
- Figur 6: einen Wandausschnitt in Draufsicht, bestehend aus zwei Bausteinreihen.

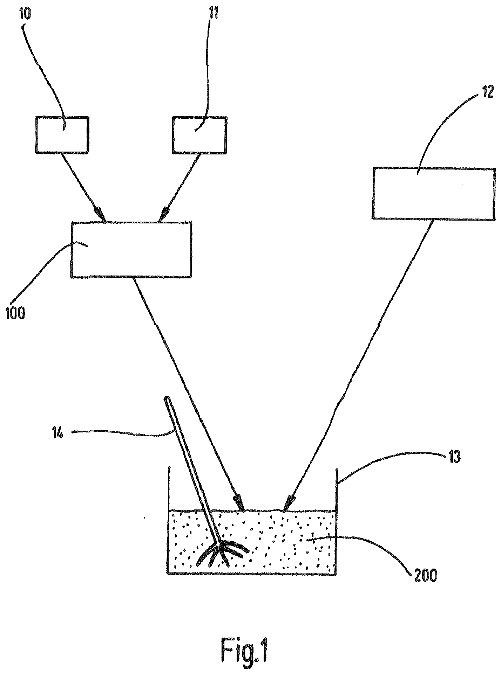

In Figur 1 ist schematisch und rein beispielhaft die Herstellung der nicht erfindungsgemäßen Baustoffmischung 100 sowie des nicht erfindungsgemäßen Polymerwerkstoffs 200, insbesondere Polymerbetonsystems, gezeigt. Dabei kann die Baustoffmischung 100 unabhängig und separat von der Harzkomponente 12 hergestellt und verpackt werden.

Die Härterkomponente 10 wird durch Vermischen von Polycarbonsäure mit Polycarbonsäureanhydrid und Zitronensäure zu einer trockenen Pulvermischung hergestellt. Die Füllstoffkomponente 11 wird durch Vermischen von Quarzsand mit Quarzmehl und Stärke sowie Zementmörtel zu einer trockenen Pulvermischung hergestellt.

Zur Herstellung der Baustoffmischung 100 als Vormischung werden Härterkomponente 10 mit der Füllstoffkomponente 11 vermischt. Die trockene Pulvermischung kann als Vormischung verpackt und über lange Zeit gelagert werden.

Die Harzkomponente 12 wird durch Vermischen von Leinölepoxid mit einem Sauerstoffgehalt von kleiner als 9,0 % mit Polycarbonsäureanhydrid und einem cationisch härtenden Katalysator hergestellt. Die flüssige resultierende Mischung kann ebenfalls als Vormischung separat verpackt und über längere Zeit gelagert werden. Kurz vor Bedarf und Verwendung des Polymerwerkstoffs 200 werden die Baustoffmischung 100 und die Harzkomponente 12 in einem Behältnis 13, beispielsweise einen Eimer, angemischt. Zur Vermischung dient beispielsweise ein üblicher Rührstab 14.

Nach ca. 2 bis 5 Minuten ist die Mischung homogen und weist einen leicht feuchten Charakter beziehungsweise eine leicht "nasse" Sandmischung auf. Der Polymerwerkstoff 200 kann dann verwendet werden. Je nach Anforderung kann die Mischung zusätzlich mit einer Temperatur, beispielsweise im Bereich zwischen 30 °C und 70 °C beaufschlagt werden. Der Polymerwerkstoff 200 bindet das Material in wenigen Minuten formstabil ab und erreicht in weniger als 1 Stunde ca. 20 % der Endhärte und ist somit bereits begehbar. In weniger als 12 Stunden erreicht der Polymerwerkstoff ca. 80 % seiner Endhärte.

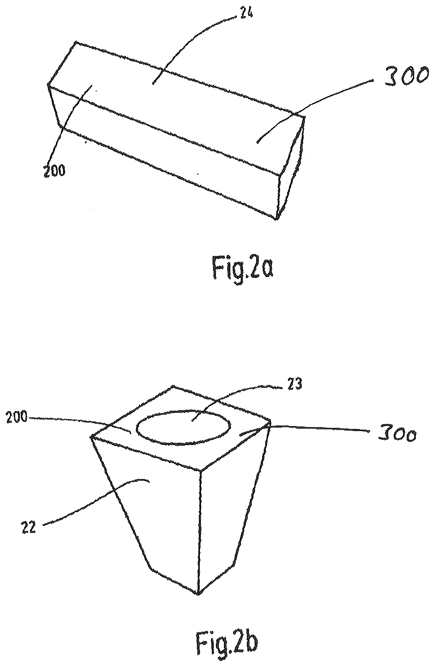

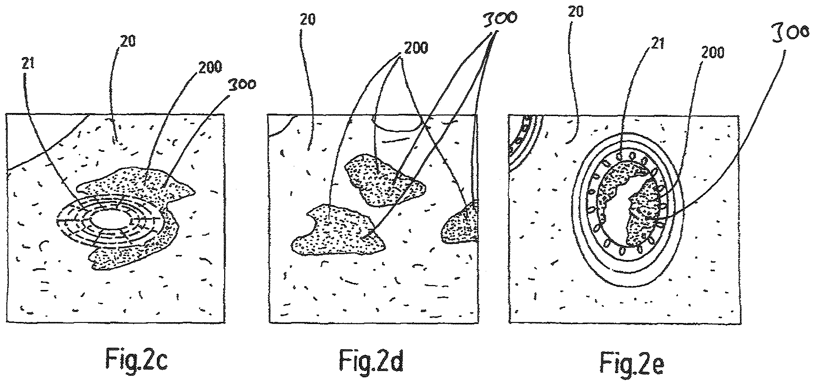

In den Figuren 2a bis 2h sind beispielhaft unterschiedliche Verwendungsmöglichkeiten für den nicht erfindungsgemäßen Polymerwerkstoff 200 gezeigt.

Beispielsweise ist in Figur 2a ein Betonbaustein 24 gezeigt, welcher aus dem Polywerkstoff 200 geformt und gefertigt wurde.

In Figur 2b ist der Ausschnitt eines Kamins 22 mit einem Kaminschacht 23 gezeigt. Dies demonstriert beispielhaft die Möglichkeit der Kaminsanierung mit dem vorgeschlagenen Polymerwerkstoff 200.

In den Figuren 2c bis 2e ist beispielhaft die Verwendung des Polymerwerkstoffs 200 für die Straßensanierung gezeigt. Dabei wird an den zu sanierenden Stellen des Straßenbelags 20 der Polymerwerkstoff 200 aufgetragen. Da das Material sehr schnell aushärtet, kann der sanierte Straßenbereich nach kurzer Zeit bereits wieder befahren werden. Um diese Zeit weiter zu verkürzen, können nach Auftragen des Polymerwerkstoffs 200 auf den Straßenbelag 20 die sanierten Stellen mittels Hitzeeinwirkung schneller ausgehärtet werden.

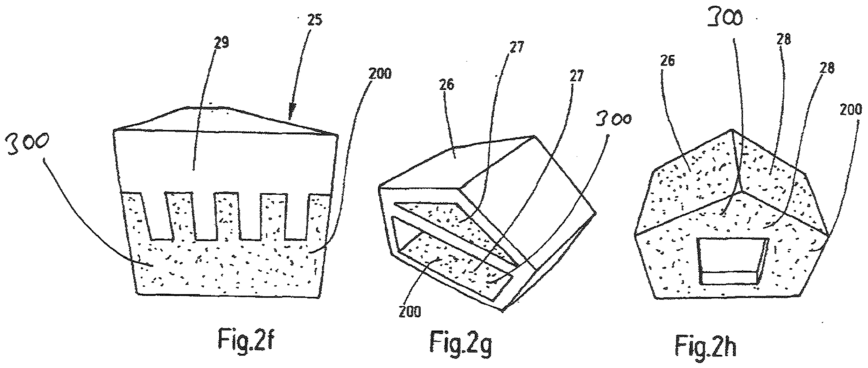

In Figur 2f ist die Verwendung des Polymerwerkstoffs 200 zur Herstellung von Holz-Betonverbundteilen 25 gezeigt. Der vorgeschlagene Polymerwerkstoff 200 weist besonders geeignete Verbundeigenschaften mit anderen Materialien, beispielsweise Holz 29 auf. Des Weiteren ist das vorgeschlagene Polymerwerkstoffsystem 200 im Verbund wesentlich leichter als herkömmliche Holz-Betonsysteme, da zur Herstellung des Verbunds keine oder zumindest weniger zusätzliche Mittel, beispielsweise Verbindungsmittel, notwendig sind. Somit kann insbesondere bei der Altbausanierung oder Denkmalsanierung der vorgeschlagene Polymerwerkstoff 200 eingesetzt werden. Insbesondere wird dies auch dadurch begründet, dass der vorgeschlagene Polymerwerkstoff 200 gegenüber herkömmlichen Polymersystemen, beispielsweise basierend auf Mineralölepoxid, Bisphenol A, Epichlorhydrin, usw., nicht toxisch sowie feuerfest und gleichzeitig wasserfest ist.

Figuren 2g und 2h zeigen ebenfalls die Verwendung des Polymerwerkstoffs 200 für die Gebäudesanierung oder den Gebäudebau. Beispielsweise kann für ein Gebäude 26 der Polymerwerkstoff 200 als Estrich 27 sowie auch als Innenputz und Außenputz 28 verwendet werden.

Sämtliche in den Figuren 2a bis 2h dargestellten beispielhaften Verwendungsmöglichkeiten können gemäß der Erfindung auch mit dem Baustoff 300 hergestellt werden.

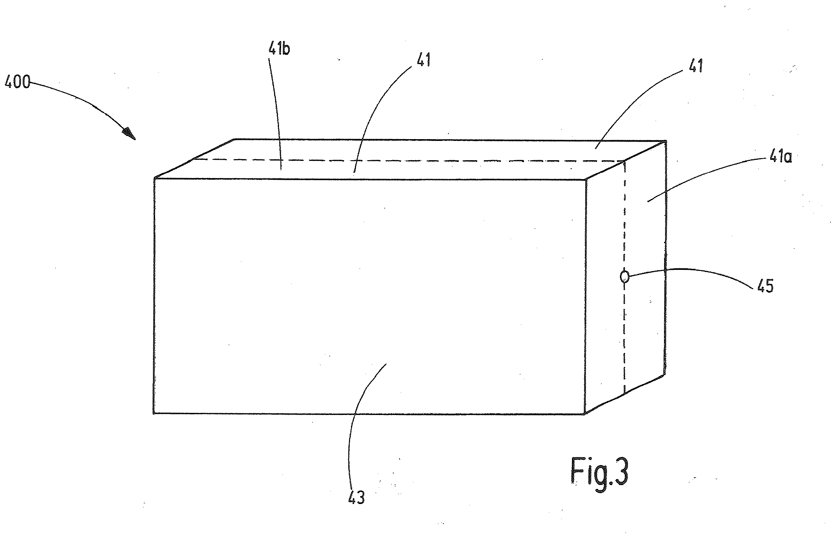

Figur 3 zeigt eine perspektivische Ansicht eines Bausteines 400, aufweisend zwei zusammengesetzte Teile 41, nämlich eine erste Halbschale 41a und eine zweite Halbschale 41b. Der Baustein 400 ist vollumfänglich durch die Außenfläche 43 umschlossen. Im Inneren des Bausteines 400 ist ein Hohlraum 40 (nicht in Figur 3 dargestellt) ausgebildet, wobei im Hohlraum 40 ein Unterdruck gegenüber der Umgebung herrscht. Der Unterdruck wurde nach Zusammensetzen und Verkleben der beiden Halbschalen 41a, 41b des Bausteines 400 dadurch hergestellt, dass eine Durchbrechung 50 durch die Seitenwand 44b hergestellt wurde. In die Durchbrechung 50 ist ein Verschlussmittel 45 eingesetzt, welches ein elastisches Material 46 und ein Abschlusselement 46a aufweist. Das Abschlusselement 46a besteht aus demselben Material wie der Baustein 400.

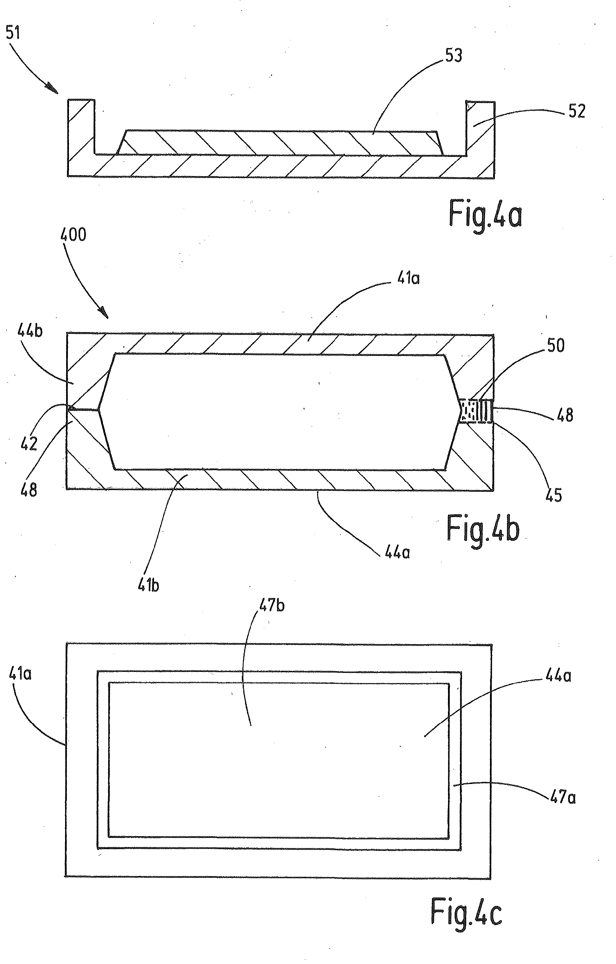

Figur 4a zeigt eine Querschnittsdarstellung einer Gießform 51 zur Herstellung einer Halbschale 41a, 41b des Bausteines 400. Die Gießform 51 weist einen Rahmen 52 sowie eine mittige Erhebung 53 auf. Hierdurch kann ein freier Raum innerhalb der Halbschalen 41a, 41b vorgesehen werden, wodurch nach Zusammensetzen der beiden Halbschalen 41a, 41b ein Hohlraum 40 entsteht.

Figur 4b zeigt eine Querschnittsdarstellung durch einen Baustein 400. Der Baustein 400 ist aus zwei Halbschalen 41a, 41b zusammengesetzt und welche mittels eines Klebemittels 42 miteinander verklebt sind. Ein Verschlussmittel 45, bestehend aus einem elastischen Material 46 und einem Abschlusselement 46a, ist in der Mitte 48 einer Seitenwand 44b des Bausteines 400 angeordnet. Dabei ist das Verschlussmittel 45 in einer Durchbrechung 50 durch die Seitenwand 44b angeordnet.

In Figur 4c ist eine Halbschale 41a, 41b des Bausteines 400 in Draufsicht gezeigt. Die Seitenwand 44a der Halbschale 41a weist zwei Bereiche 47a, 47b mit unterschiedlichen Dicken auf. Ein erster umlaufender und zur Außenkante beabstandeter Bereich 47a weist eine geringere Dicke auf. Ein zweiter Bereich 47b weist eine größere Dicke auf und ist im mittleren Bereich der Seitenwand 44a angeordnet.

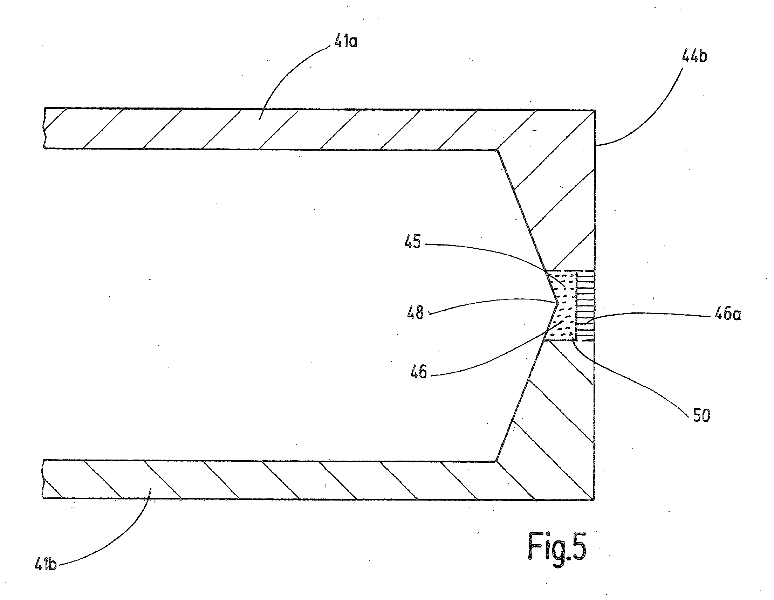

In Figur 5 ist eine vergrößerte Darstellung des Bereiches gezeigt, in welchem die beiden Halbschalen 41a, 41b des Bausteines 400 zusammengesetzt sind und das Verschlussmittel 45 angeordnet ist. Dabei besteht das Verschlussmittel 45 aus einem elastischen Material 46 und einem Abschlusselement 46a. Beide Bestandteile des Verschlussmittels 45 sind in der Durchbrechung 50 durch die Seitenwand 44a des Bausteines 400 angeordnet. Dabei ist das elastische Material 46 über die Hälfte der Dicke der Seitenwand 44b in diesem Bereich angeordnet. Das Abschlusselement 46a des Verschlussmittels 45 besteht aus demselben Material wie die beiden Halbschalen 41a, 41b des Bausteines 400. Das Abschlusselement 46a des Verschlussmittels 45 ist dabei derart in der Durchbrechung angeordnet, dass hierdurch die Durchbrechung vollständig verschlossen wird. Dabei schließt das Abschlusselement 46a innerhalb der Durchbrechung an das elastische Material 46 an und schließt bündig mit der Außenfläche 43 des Bausteines 400 ab.

Die Abmessungen eines Bausteines 400 sowie die Massen des verwendeten Betonmaterials zur Herstellung des Bausteines 400 können beliebig gewählt werden. Beispielsweise könnte ein Baustein 400 ein Gewicht zwischen 12 kg und 15 kg sowie eine Breite von 50 cm, eine Höhe von 25 cm und eine Tiefe von 10 cm aufweisen. Für die Verwendung eines Bausteines 400 zur Herstellung eines Wandsystems 54 ist beispielsweise vorgesehen, dass Bausteine 400 mit unterschiedlichen Maßen verwendet werden. Beispielsweise könnte ein erster Baustein 400 eine Breite von 25 cm, eine Höhe 25 cm und eine Tiefe von 10 cm aufweisen. Ein zweiter Baustein 400 könnte eine Breite von 12,5 cm, eine Höhe von 50 cm und eine Tiefe von 10 cm aufweisen. Des Weiteren könnte ein dritter Baustein 400 eine Breite von 12,5 cm, eine Höhe von 25 cm und eine Tiefe von 10 cm aufweisen, wobei alle drei Bausteine 400 auf einer identischen Konstruktionsweise basieren. Hierdurch ist ein versetztes Mauern in allen Höhen und Längen möglich. Dabei wird nicht nur die Stabilität erhöht, sondern in erster Linie die Materialbrücken auf weniger als 4% der Wandfläche reduziert. Somit entsteht ein Mauerverbund, der zu 96% einen durchgängigen Hohlraum 40 mit Unterdruck enthält.

Ein Baustein 400 kann beispielsweise eine Außenwandstärke von 6 cm und eine Hohlraumbreite von 4 cm aufweisen. Die Innenwandstärke an den Stirnflächen beziehungsweise Stoßflächen im Bereich der Verklebung zum Nachbarstein beträgt konisch 3 cm bis 4 cm. Ein einzelner Baustein 400 kann somit beispielsweise ein durch den Hohlraum 40 gebildetes Volumen von 4 I in einem Flächenanteil von circa 80% aufweisen. Durch ein versetztes Mauern kann der Flächenanteil mit unterdruckaufweisendem Hohlraum auf 96% der gesamten Wandfläche erhöht und die Materialbrücken auf unter 4% verringert werden. Dies basiert auf einer Wand mit zwei zueinander versetzten Bausteinreihen 55a, 55b. Durch Vorsehen einer dritten oder beliebig weiteren Bausteinreihe 55a, 55b würde dieser Wert weiter reduziert und die Isolierfläche weiter gegen nahe 100% erhöht werden.

Mit einem System, basierend auf dem Baustein 400, können somit isolierende Wände, aber auch Fußbodenflächen, in beliebiger Stärke in versetzten Schichten gemauert werden. Die mittels eines Prisma der üblichen Testmaße von 4 cm x 4 cm x 16 cm (B/H/L) ermittelten Festigkeiten des jeweils verwendeten Materials betragen:

| | |
|---|---|
| - Druckfestigkeit: | bis zu 100 kN pro Quadratmillimeter, |
| - Biegezugfestigkeit: | bis zu 40 kN pro Quadratmillimeter, |
| - E-Modul: | bis zu 45.000. |

Hierdurch ist gewährleistet, dass mit den Bausteinen mehrstöckige Häuser gemauert werden können. Die Wandstabilität und Isolierkraft kann durch Erhöhung der Anzahl der zueinander versetzten Bausteinreihen 55a, 55b gesteigert werden.

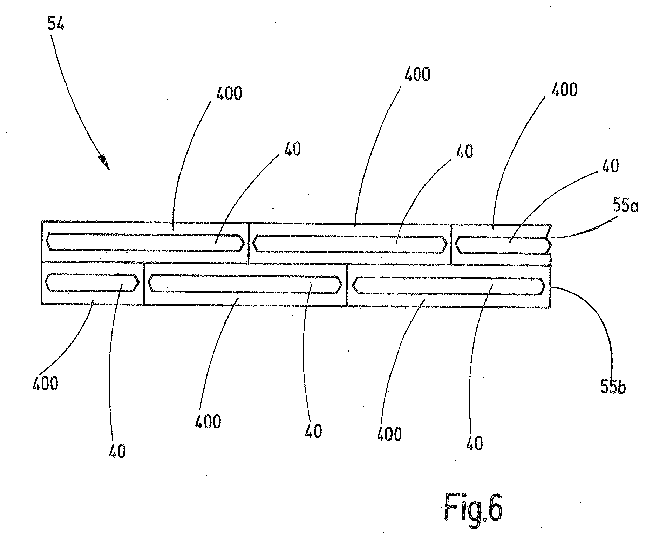

In Figur 6 ist schematisch ein Ausschnitt eines Wandsystems 54 in Draufsicht, bestehend aus zwei Bausteinreihen 55a, 55b, gezeigt. Die Bausteine 400 der beiden Bausteinreihen 55a, 55b sind dabei versetzt zueinander angeordnet, um die effektive Isolierfläche zu erhöhen.

### Bezugszeichenliste

- 100: Baustoffmischung
- 200: Polymerwerkstoff
- 300: Baustoff
- 400: Baustein

- 10: Härterkomponente
- 11: Füllstoffkomponente
- 12: Harzkomponente
- 13: Behältnis
- 14: Rührstab

- 20: Straßenbelag
- 21: Straßenablauf
- 22: Kamin
- 23: Kaminschacht
- 24: Polymerbetonbaustein
- 25: Holz-Betonverbund
- 26: Gebäude
- 27: Estrich
- 28: Außenputz
- 29: Holz

- 30: Bindemittel
- 31: Dispersionsklebstoff
- 32: Zuschlagstoff
- 33: Zusatzkomponente

- 40: Hohlraum
- 41: Teile des Bausteins
- 41a, 41b: Halbschalen des Bausteins
- 42: Klebemittel
- 43: Außenfläche des Bausteins
- 44a, 44b: Seitenwand des Bausteins
- 45: Verschlussmittel
- 46: elastisches Material des Verschlussmittels
- 46a: Abschlusselement des Verschlussmittels
- 47a, 47b: zwei Bereiche einer Seitenwand
- 48: Mitte einer Seitenwand
- 49: hohles stiftförmiges Mittel
- 50: Durchbrechung
- 51: Gießform
- 52: Rahmen
- 53: Erhebung
- 54: Wandsystem
- 55a, 55b: Bausteinreihen

## Patentansprüche

1. Baustoff (300), nämlich Beton, aufweisend ein Bindemittel (30), wobei das Bindemittel (30) Zement aufweist, **dadurch gekennzeichnet, dass** der Baustoff (300) ferner einen wasserfesten Dispersionsklebstoff (31), nämlich Dispersionsleim, aufweist, wobei der Baustoff (300) den Dispersionsklebstoff (31) mit einem Massenanteil zwischen 10% und 50% aufweist, und wobei der Baustoff (300) das Bindemittel (30) mit einem Massenanteil zwischen 25% und 90% aufweist.

2. Baustoff (300) gemäß Anspruch 1, **dadurch gekennzeichnet, dass** der Baustoff (300) den Dispersionsklebstoff (31) mit einem Massenanteil zwischen 20% und 40%, aufweist.

3. Baustoff (300) gemäß Anspruch 1 oder 2, **dadurch gekennzeichnet, dass** der Baustoff (300) das Bindemittel (30) mit einem Massenanteil zwischen 35% und 60% aufweist.

4. Baustoff (300) gemäß einem der vorhergehenden Ansprüche, **dadurch gekennzeichnet, dass** der Baustoff (300) mindestens einen Zuschlagstoff (32) aufweist, wobei der Zuschlagstoff (32) Kies, Sand, Mehl, Quarzsand, Quarzmehl, Farbpigmente, Aluminiumhydroxid und/oder einen pflanzlichen Rohstoff, insbesondere Stärke und/oder Faserstoff, aufweist.

5. Baustoff (300) gemäß einem der vorhergehenden Ansprüche, **dadurch gekennzeichnet, dass** der Baustoff (300) mindestens eine Zusatzkomponente (33) zur Verstärkung aufweist, wobei die Zusatzkomponente (33) Glasfasern aufweist.

6. Verwendung eines Baustoffs (300) gemäß einem der vorhergehenden Ansprüche zur Herstellung von Baukomponenten, insbesondere Bausteinen.

7. Verwendung eines Baustoffs (300) gemäß einem der Ansprüche 1 bis 5 zur Sanierung von Objekten, insbesondere in den Bereichen Hausbau, Gewerbebau, Fertigbau, Betonsanierung, Brückensanierung, Kaminsanierung, Rohbau, Hochbau und/oder Tiefbau.

8. Verwendung eines Baustoffs (300) gemäß einem der Ansprüche 1 bis 5 für den Hausbau, den Gewerbebau, den Fertigbau, die Betonsanierung, die Brückensanierung, die Kaminsanierung, den Rohbau, den Hochbau und/oder den Tiefbau.

9. Baustein (400) aufweisend einen vollumfänglich umschlossenen Hohlraum (40) durch welchen ein Volumen im Inneren des Bausteins (400) definiert wird, wobei der Baustein (400) im Hohlraum (40) einen Unterdruck in Bezug auf eine Umgebung bei Normalbedingung aufweist, wobei der Baustein (400) im Hohlraum (40) bevorzugterweise einen Druck kleiner als 800 mbar, besonders bevorzugterweise kleiner als 500 mbar, besonders bevorzugterweise kleiner als 300 mbar, aufweist, **dadurch gekennzeichnet, dass** der Baustein (400) einen Baustoff (300) gemäß einem der Ansprüche 1 bis 5 aufweist oder aus diesem besteht.

10. Baustein (400) gemäß Anspruch 9, **dadurch gekennzeichnet, dass** der Baustein (400) eine Außenfläche (43) aufweist, welche vollumfänglich aus einem einzigen Baustoff, insbesondere Beton, ausgebildet ist, und/oder **dass** der Baustein (400) in einer Seitenwand (44a, 44b) des Bausteins (400) ein Verschlussmittel (45) aufweist, wobei das Verschlussmittel (45) elastisches Material (46) aufweist, wobei das Verschlussmittel (45) bevorzugterweise irreversibel in der Seitenwand (44a, 44b) des Bausteins (400) angeordnet ist.

## Claims

1. Building material (300), namely concrete, having a binder (30), wherein the binder (30) has cement, **characterized in that** the building material (300) further has a waterproof dispersion adhesive (31), namely dispersion glue, wherein the building material (300) has the dispersion adhesive (31) with a mass fraction between 10% and 50%, and wherein the building material (300) has the binder (30) with a mass fraction between 25% and 90%.

2. Building material (300) according to claim 1, **characterized in that** the building material (300) has the dispersion adhesive (31) with a mass fraction between 20% and 40%.

3. Building material (300) according to claim 1 or 2, **characterized in that** the building material (300) has the binder (30) with a mass fraction between 35% and 60%.

4. Building material (300) according to one of the preceding claims, **characterized in that** the building material (300) has at least one aggregate (32), wherein the aggregate (32) has gravel, sand, flour, quartz sand, quartz powder, color pigments, aluminum hydroxide and/or a vegetable raw material, in particular starch and/or fibrous material.

5. Building material (300) according to one of the preceding claims, **characterized in that** the building material (300) has at least one additional component (33) for reinforcement, wherein the additional component (33) has glass fibers.

6. Use of a building material (300) according to one of the preceding claims for producing building components, in particular building blocks.

7. Use of a building material (300) according to one of claims 1 to 5 for the renovation of objects, in particular in the fields of house construction, commercial construction, prefabricated construction, concrete renovation, bridge renovation, chimney renovation, shell construction, structural engineering and/or civil engineering.

8. Use of a building material (300) according to any one of claims 1 to 5 for house construction, commercial construction, prefabricated construction, concrete renovation, bridge renovation, chimney renovation, shell construction, structural engineering and/or civil engineering.

9. A building block (400) having a fully enclosed cavity (40) by which a volume is defined within the interior of the building block (400), wherein the building block (400) has a negative pressure within the cavity (40) with respect to an environment at normal condition, wherein the building block (400) in the cavity (40) preferably has a pressure lower than 800 mbar, more preferably lower than 500 mbar, more preferably lower than 300 mbar, **characterized in that** the building block (400) has or consists of a building material (300) according to one of claims 1 to 5.

10. Building block (400) according to claim 9, **characterized in that** the building block (400) has an outer surface (43) which is formed entirely from a single building material, in particular concrete, and/or **in that** the building block (400) has a closure means (45) in a side wall (44a, 44b) of the building block (400), wherein the closure means (45) has elastic material (46), wherein the closure means (45) is preferably irreversibly arranged in the side wall (44a, 44b) of the building block (400).

## Revendications

1. Matériau de construction (300), à savoir du béton, comportant un agent liant (30), l'agent liant (30) comportant du ciment, **caractérisé en ce que** le matériau de construction (300) comporte par ailleurs un agent adhésif en dispersion (31) étanche, à savoir une colle en dispersion, le matériau de construction (300) comportant l'agent adhésif en dispersion (31) dans une part en masse comprise entre 10% et 50%, et le matériau de construction (300) comportant l'agent liant (30) dans une part en masse comprise entre 25 % et 90 %.

2. Matériau de construction (300) selon la revendication 1, **caractérisé en ce que** le matériau de construction (300) comporte l'agent adhésif en dispersion (31) dans une part en masse comprise entre 20 % et 40 %.

3. Matériau de construction (300) selon la revendication 1 ou 2, **caractérisé en ce que** le matériau de construction (300) comporte l'agent liant (30) dans une part en masse comprise entre 35 % et 60 %.

4. Matériau de construction (300) selon l'une quelconque des revendications précédentes, **caractérisé en ce que** le matériau de construction (300) comporte au moins un additif (32), l'additif (32) comportant du gravier, du sable, de la poudre, du sable quartzeux, de la poudre de quartz, des pigments colorés, de l'hydroxyde d'aluminium et/ou une matière première végétale, notamment de l'amidon et/ou une matière fibreuse.

5. Matériau de construction (300) selon l'une quelconque des revendications précédentes, **caractérisé en ce que** le matériau de construction (300) comporte au moins un composant additionnel (33) pour son renforcement, le composant additionnel (33) comportant des fibres de verre.

6. Utilisation d'un matériau de construction (300) selon l'une quelconque des revendications précédentes pour la fabrication de composants de construction, notamment de pierres de construction.

7. Utilisation d'un matériau de construction (300) selon l'une quelconque des revendications 1 à 5 pour la restauration d'objets, notamment dans les secteurs de la construction résidentielle, de la construction industrielle, des bâtiments préfabriqués, de la rénovation de béton, de la rénovation de ponts, de la rénovation de cheminées, du gros-œuvre, du bâtiment et/ou du génie civil.

8. Utilisation d'un matériau de construction (300) selon l'une quelconque des revendications 1 à 5 pour la construction résidentielle, la construction industrielle, les bâtiments préfabriqués, la rénovation de béton, la rénovation de ponts, la rénovation de cheminées, le gros-œuvre, le bâtiment et/ou le génie civil.

9. Pierre de construction (400) comportant une cavité (40) intégralement entourée définissant un volume à l'intérieur de la pierre de construction (400), la pierre de construction (400) présentant dans la cavité (40) une dépression par rapport à un environnement dans des conditions normales (400), la pierre de construction (400) présentant dans la cavité (40) de préférence une pression inférieure à 800 mbar, de manière particulièrement préférentielle, inférieure à 500 mbar, de manière particulièrement préférentielle, inférieure à 300 mbar, **caractérisée en ce que** la pierre de construction (400) comporte un matériau de construction (300) selon l'une quelconque des revendications 1 à 5 ou est constituée de celui-ci.

10. Pierre de construction (400) selon la revendication 9, **caractérisée en ce que** la pierre de construction (400) comporte une surface extérieure (43), laquelle est intégralement constituée d'un unique matériau de construction, notamment de béton, et/ou **en ce que** la pierre de construction (400) comporte dans une paroi latérale (44a, 44b) de la pierre de construction (400) un moyen de fermeture (45), le moyen de fermeture (45) comportant une matière élastique (46), le moyen de fermeture (45) étant placé de préférence de manière irréversible dans la paroi latérale (44a, 44b) de la pierre de construction (400).
